# EUROPÄISCHE PATENTSCHRIFT

(11) **EP 4 406 755 B1**
(45) Veröffentlichungstag und Bekanntmachung des Hinweises auf die Patenterteilung: **25.02.2026**
(21) Anmeldenummer: 23208840.1
(22) Anmeldetag: 09.11.2023
(51) Int. Cl.: B60B 17/00

(54) **EISENBAHNRAD**
RAILWAY WHEEL
ROUE DE CHEMIN DE FER

(30) Priorität: 25.01.2023 CZ 20230024
(43) Veröffentlichungstag der Anmeldung: 31.07.2024
(73) Patentinhaber: Bonatrans Group a.s., 73581 Bohumín (CZ)
(72) Erfinder: PAVCO, Jaromír, 73531 Bohumín, Skrecon (CZ)
(74) Vertreter: Jeck, Jonathan

(56) Entgegenhaltungen:
- EP-A1- 1 225 065
- WO-A1-03/064182
- FR-A1- 2 485 993

## Beschreibung

Die technische Lösung betrifft die Konstruktion eines Eisenbahnrades, nach Anspruch 1, das sich beim Bremsen durch einen Block aufgrund erheblicher thermischer Beanspruchung und anschließender Abkühlung in Verbindung mit der Radlast dauerhaft leicht verformt.

Eisenbahnräder bestehen aus drei Hauptteilen, nämlich der Radnabe, der Radfelge und der Radscheibe. Die Radscheibe bildet den Übergang zwischen der Radnabe und der Radfelge.

Es sind Räder bekannt, die eine gerade Radplattenform haben, z. B. nach dem Patent Nr. EP 1389539. Diese Räder werden in Radsätzen verwendet, die mit Scheibenbremsen auf der Achse gebremst werden.

Für Radsätze, die auf der Lauffläche gebremst werden, werden Räder mit unterschiedlich gekrümmten und geformten Radplatten verwendet. Dabei hat die Form der Radplatte einen Einfluss auf die Widerstandsfähigkeit des Rades gegenüber mechanischen und thermischen Belastungen.

Ein bekanntes im Einsatz befindliches Eisenbahnrad ist das Glockenrad nach Patent DE 3117572. Hierbei wird die Mittellinie der Radscheibe, d. h. ihre Achse, durch eine regelmäßige, durch eine Kosinusfunktion definierte Kurve gebildet, die in der Praxis oft durch drei gleiche Krümmungsradien angenähert wird. Dieses Rad hat den Vorteil eines geringeren Radgewichts und geringerer Eigenspannungen in der Felge nach dem Abkühlen nach dem Bremsen. Ein großer Nachteil ist jedoch, dass die Radkonstruktion unter den Betriebsbelastungen des Rades hohe Spannungen in der Radplatte aufweist.

Die Räder nach den Patentnummern EP 1470006, EP 1225065, EP 2792502 und RU 2722782 weisen eine ähnliche Konstruktion der Radplatte auf wie das Glockenrad. Deren Konstruktion ist symmetrisch zum Radius des zentralen Umlenkpunktes der Platte aufgebaut. Der Nachteil der Konstruktion dieses genannten Patents ist, dass an der kritischen Stelle der Radplatte lokale maximale Biegespannungen mit hohen Werten auftreten.

Aus der WO 03/064182 A1 ist ein Eisenbahnrad bekannt, dessen Mittelebene (P1) senkrecht zur Drehachse (Z) des Rades verläuft, wobei das Rad eine Felge (1), die aus einer Rollfläche (2) und einem Spurkranz (3) besteht, eine Radplatte (4) und eine Radnabe (5) umfasst. Das Querprofil der Radplatte (4) liegt um die theoretische Mittellinie mit definierten Punkten (A, B, C), wobei der erste Punkt (A) und der zweite Punkt (B) in einer Ebene (P2) liegen, wobei der erste Punkt (A) und der zweite Punkt (B) in einer Ebene (P2) liegen, die senkrecht zu einer Drehachse (Z) des Rades verläuft und von der Mittelebene (PI) in Richtung der Außenkante (8) der Radfelge (1) verschoben ist, und wobei der Abstand (H3) zwischen der Ebene (P2) und dem zentralen Punkt (C) der Mittellinie der Radplatte (4) maximal 0,5 der Breite (H1) der Radfelge (1) beträgt. Einzelne Teile der Mittellinie der Radplatte (4) werden durch Kreisbögen (R5, R6, R7, R8) oder durch Teile von kubischen Kurven oder durch Kombinationen von Kreisbögen, geraden Abschnitten und Teilen von kubischen Kurven gebildet von kubischen Kurven. Die inneren Krümmungsradien (R6, R7) der Radplatte (4) der beiden Abschnitte (AC, BC) der Mittellinie sind größer als die äußeren Krümmungsradien (R5, R8) der Radplatte (4) in den genannten Abschnitten.

Eine weitere bekannte Konstruktion ist das Rad nach Patent Nr. EP 1440817. Dabei wird die Radplatte aus definierten geraden, ineinandergreifenden Abschnitten gebildet. Diese Konstruktion ist für anspruchsvolle Einsatzbedingungen geeignet, und das Gewicht des Rades ist um etwa 25 kg höher als das eines Glockenrades.

Ein weiteres Rad, das nach dem Patent EP 2046585 verwendet wird, ist ein Rad mit hoher Bremsleistung und guter Geräuschdämpfung. Es zeichnet sich durch eine große Breite der Felge auf Kosten eines hohen Gewichts und damit höherer Produktionskosten aus. Ein weiterer Nachteil dieser Konstruktion ist, dass an einer kritischen Stelle in der Radplatte lokale maximale Biegespannungen mit hohen Werten auftreten.

Die vorgenannten Nachteile werden durch das erfindungsgemäße Eisenbahnrad beseitigt. Dabei steht die Mittelebene senkrecht zur Drehachse des Rades und umfasst einen von einer Lauffläche und einer Felge gebildeten Radkranz, eine Radscheibe und eine Radnabe. Das Querprofil der Radscheibe liegt im Wesentlichen entlang einer theoretischen Mittellinie, die zwischen einem ersten Punkt, der im Bereich des Übergangs der Radplatte zur Felge liegt, und einem zweiten Punkt, der im Bereich des Übergangs der Platte zur Radnabe liegt, verläuft. Dabei liegen diese beiden Punkte auf derselben Ebene, wobei diese Ebene von der Mittelebene um einen Abstand H1 in Richtung vom Umfang beabstandet ist. Die Größe von H1 ist durch das Verhältnis 0,03-0,25 der Breite H der Radfelge bestimmt. Die theoretische Mittellinie verläuft ferner durch einen Wendepunkt der zwischen einem ersten Bogen mit dem Radius R1 und einem zweiten Bogen mit dem Radius R2 liegt, wobei R1 ein erster und R2 ein zweiter Krümmungsradius ist. Die theoretische Mittellinie verläuft ferner durch einen Punkt, der durch die maximale axiale Durchbiegung der Radplatte in einem Abstand H2 von der Ebene, die den ersten und den zweiten Punkt enthält, definiert ist. Die theoretische Mittellinie geht ferner durch einen Berührungspunkt, an dem die theoretische Mittellinie tangential in eine Linie übergeht, die durch den zweiten Punkt verläuft. Die theoretische Mittellinie bildet einen Winkel α mit der Ebene, die den ersten und den zweiten Punkt enthält. Dabei liegen der Wendepunkt, der durch die maximale axiale Auslenkung der Radplatte definierte Punkt und der Berührungspunkt in einer Richtung weg von der Ebene, die den ersten und den zweiten Punkt enthält.

Vorzugsweise ist der Radius R2 des zweiten Bogens der theoretischen Mittellinie größer als oder gleich dem Radius R1 des ersten Bogens der theoretischen Mittellinie.

Weiter bevorzugt sind der erste und der zweite Bogen der theoretischen Mittellinie der Platte zwischen dem ersten Punkt und dem Kontaktpunkt als Kreise und/oder Kurven zweiten oder dritten Grades angeordnet.

Ein Vorteil der gewählten Plattenform ist, dass bei Belastung durch die Radkräfte der Bereich maximaler Biegespannung am kritischen Punkt der Radplatte gleichmäßig aufgeweitet und damit der Wert dieser Spannung reduziert wird.

Ein weiterer Vorteil dieses Eisenbahnrades besteht darin, dass es unter thermomechanischer Belastung sehr niedrige Werte der Tangentialspannung im Radkranz und vor allem niedrige Werte der bleibenden plastischen Verformung aufweist. Das optimale Gewicht des Rades selbst wird dabei beibehalten; außerdem hat es eine einfache Herstellungsform und damit niedrige Produktionskosten.

Dadurch kann das Rad nicht nur für Lastkraftwagen, sondern für alle Arten von Fahrzeugen mit einer Scheibenbremse auf der Lauffläche, einschließlich Triebfahrzeugen und Lokomotiven, verwendet werden.

Beim Bremsen mit einer Scheibenbremse ist das Rad in der Lage, wiederholte Bremszyklen aufzunehmen mit einer Leistung von 50 kW 45 Minuten lang ohne negative Auswirkungen auf die Verformung des Radkranzes und die Zunahme der tangentialen Zugspannungen im Radkranz bei der Abkühlung des Radkranzes nach der Erwärmung durch das Bremsen. Dies führt zu einer nur geringfügigen Veränderung der Spurweite bzw. Spaltweite des Eisenbahnradsatzes, die innerhalb des in den europäischen Normen festgelegten zulässigen Bereichs liegt. Somit wird die Sicherheit beim Passieren von Weichen und Kreuzungen gewährleistet und die Möglichkeit des Entgleisens von Eisenbahnwaggons verringert.

### Übersicht über die Figuren in den Zeichnungen

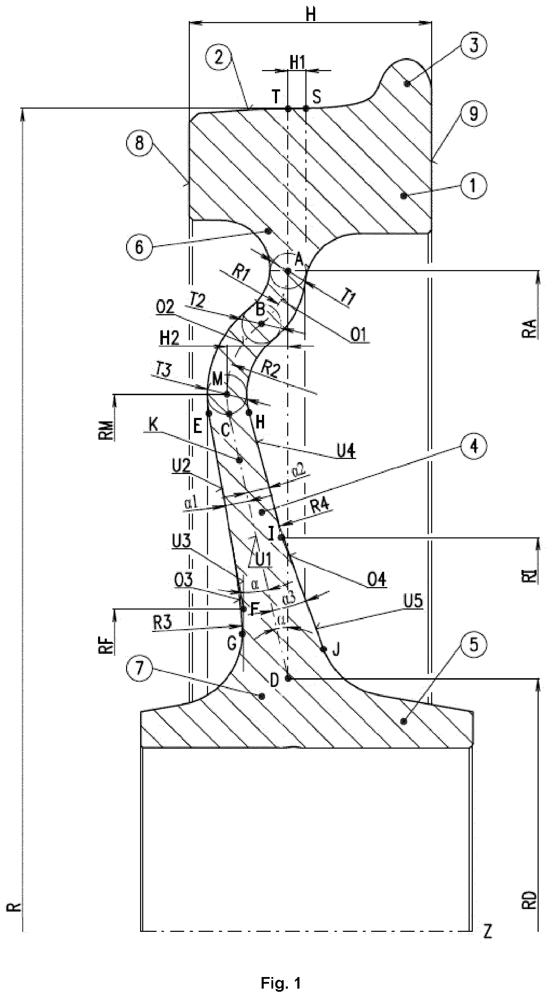

Figur 1 zeigt einen Querschnitt durch ein halbes Eisenbahnrad.

### Beispielhafte Ausführungsform der Erfindung

Das Eisenbahnrad gemäß der vorliegenden Erfindung mit einem Außenradius R umfasst einen Kranz 1 mit einer Lauffläche 2 und einem Radsatz 3, eine Radplatte 4 und eine Radnabe 5. Dabei ist zwischen dem Kranz 1 und der Radplatte 4 ein Übergangsbereich 6 und zwischen der Radplatte 4 und der Nabe 5 ein Übergangsbereich 7 ausgebildet. Der Radius R liegt zwischen 300 und 625 mm, in einer bevorzugten Ausführungsform beträgt der Radius des Rades 460 mm.

Das Rad wird aus einer beliebigen Stahlsorte, die bei der Eisenbahn nach den bekannten technischen Normen verwendet wird, durch Walzen und Schmieden hergestellt.

Die Breite des Kranzes 1 des Rades H, definiert durch seine Außenkante 8 und Innenkante 9, beträgt 110 - 150 mm, in der häufigsten und günstigsten Ausführung 135 mm.

Die Mittelebene S geht durch das Eisenbahnrad im Punkt des sogenannten Kontaktkreises, wo die theoretische Lauffläche des Rades auf den Mittelpunkt des Schienenkopfes trifft. Die Mittelebene S steht senkrecht zur Drehachse des Rades Z. Dann geht eine Ebene T durch das Eisenbahnrad, die von der Mittelebene S in einem Abstand H1 in Richtung der Felge 3 liegt. Dabei ist die Größe von H1 durch die Beziehung H1 = max 0,25H definiert, z. B. H1 = 0,2H.

Ein Punkt A wird in der Ebene T in einem Abstand RA definiert, der durch den Übergangsbereich 6 definiert ist, wobei der Abstand RA durch die Beziehung (0,7 - 0,85)R definiert ist, zum Beispiel ist der Abstand RA 0,83R, und ein Punkt D wird in einem Abstand RD definiert, der durch den Übergangsbereich 7 definiert ist, wobei der Abstand RD durch die Beziehung 0,25-0,35 R definiert ist, zum Beispiel ist RA 0,33R, und diese Punkte A, D definieren die theoretische Mittellinie K.

Auf der theoretischen Mittellinie K des Querschnitts der Platte 4 des Rades wird ein Punkt B definiert, der ein Wendepunkt ist. Er liegt zwischen einem Bogen O1 mit dem Radius R1 und einem Bogen O2 mit dem Radius R2, dem ersten und zweiten Krümmungsradius.

Ferner wird ein Punkt M auf der theoretischen Mittellinie K des Querprofils der Rad-platte 4 definiert, der auf dem Radius RM liegt und dessen Lage durch die maximale axiale Auslenkung der Radplatte 4 um einen Abstand H2 von der Ebene T bestimmt wird. Dabei ist der Abstand H2 durch die Beziehung (2-5)H1 definiert, z. B. beträgt der Abstand H2 3xH1.

Im Hinblick auf die Konstruktion des Fahrgestells des Eisenbahnwagens und die Führung und das seitliche Spiel der Radsätze im Fahrgestell wird die maximale axiale Einfederung der Radplatte 4 vorzugsweise so gewählt, dass die Oberfläche der Radplatte 4 die Außenkante 8 des Radkranzes 1 nicht überschreitet.

Ferner wird auf der theoretischen Mittellinie K des Querprofils der Radplatte 4 ein Punkt C definiert, der der Berührungspunkt ist, an dem die theoretische Mittellinie K tangential in eine Linie übergeht.

Die theoretische Mittellinie K der Platte besteht aus einem Segment zwischen den Punkten AB, das durch einen Kreisbogen O1 mit dem Radius R1 gebildet wird, einem Segment zwischen den Punkten BC, das durch einen Kreisbogen O2 mit dem Radius R2 gebildet wird, und einem dritten Segment zwischen den Punkten CD, das durch ein Liniensegment U1 gebildet wird. Das Liniensegment U1 tangiert im Punkt C den Bogenteil der theoretischen Mittellinie K der Platte und bilde t im Punkt D einen Winkel α mit der Ebene T. Der Winkel α liegt im Bereich von 10 -20°, zum Beispiel 17°.

In dem Teil zwischen den Punkten AC wird die äußere und innere Kontur der 4-Rad-Platte durch Bögen gebildet. Dabei weist die 4-Rad-Platte im Punkt A eine Dicke T1, im Punkt B eine Dicke T2 und im Punkt M eine Dicke T3 auf, wobei T1=T2=T3 oder T1<T2<T3 sind. Die Dicken T1, T2, T3 liegen im Bereich von 16 - 22 mm, z. B. die Dicken T1 = 16 mm, T2 = 17 mm und T3 = 22 mm.

Die einzelnen Teile der theoretischen Mittellinie K der Radplatte zwischen den ersten vier Punkten A, B, M, C werden durch Kreisbögen gebildet, so dass der Abschnitt von A nach B aus der Krümmung mit einem ersten Krümmungsradius R1 und der Abschnitt von B bis M aus einer Krümmung mit einem zweiten Krümmungsradius R2 besteht. Dabei ist der erste Radius R1 kleiner als der zweite Radius R2 oder beide Radien sind gleich.

Im Abschnitt zwischen den Punkten CD, dem sogenannten Segmentabschnitt der Platte 4 des Rades, wird die Außenkontur der Platte 4 des Rades durch ein Segment U2. Das Segment U2 verläuft durch die Punkte E und F unter einem Winkel α1 zum Segment U1, wobei der Winkel α1 im Bereich von (1-5)° liegt und beispielsweise 1,5° beträgt. Dabei wird ein Segment U3 gebildet, das durch die Punkte F und G unter einem Winkel α zum Segment U1 verläuft.

Der Punkt E ist der Tangentenpunkt zwischen dem Bogen und dem Segment der 4-Rad-Platte und liegt an der Außenseite der Platte.

Die Außenkontur der Platte 4 des Rades wird durch einen Übergangsradius O3 mit dem Radius R3 gebildet, der sich tangential an die Segmente U2 und U3 anschließt. Der Punkt F liegt auf dem Radius RF und ist ein gemeinsamer Punkt der Segmente U2 und U3.

Die Innenkontur der Vierradplatte wird gebildet durch die Linie U4, die durch die Punkte H und I unter einem Winkel α2 zur Linie U1 verläuft. Der Winkel α2 beträgt (1-5)°, beispielsweise 2,5°,und verläuft durch die Linie U5, die durch die Punkte I und J unter einem Winkel α3 zur Linie U1 . Der Winkel α3 liegt im Bereich von (4-9)°, beispielsweise 6°.

Der Punkt H ist der Tangentenpunkt zwischen dem Bogen und dem Segment der Platte 4 des Rades und liegt auf dessen Innenseite.

Die Außenkontur der 4-Rad-Platte wird durch den Übergangsradius O4 mit dem Radius R4 gebildet, der tangential an die Segmente U4 und U5 anschließt. Der Punkt I liegt auf dem Radius RI und ist der gemeinsame Punkt der Segmente U4 und U5. Die Winkel α1 und α2 sind in diesem Fall gleich.

Die äußere und innere Kontur der Radplatte 4 kann auch durch einen einzigen Bogen oder eine Kurve der zweiten oder dritten Art gebildet werden.

In der am meisten bevorzugten Ausführungsform ist das Eisenbahnrad so konstruiert, dass der Abstand des ersten Punktes A der theoretischen Mittellinie K der Rad-platte 4 von der Drehachse Z des Rades zwischen dem 0,7- und 0,85-fachen des Außenradius R des Eisenbahnrades liegt. Der Abstand des vierten Punktes M der theoretischen Mittellinie K der Radplatte 4 von der Drehachse Z des Rades liegt zwischen dem 0,6- und 0,7-fachen des Außenradius R des Rades. Der Abstand des zweiten Punktes D der theoretischen Mittellinie K der Radplatte 4 von der Drehachse Z des Rades liegt zwischen dem 0,25- und 0,35-fachen des Außenradius R des Rades.

In der am meisten bevorzugten Ausführungsform ist das Eisenbahnrad so ausgelegt, dass die Bruchstelle F der äußeren Bruchlinie der Radplatte 4 in einem Abstand vom 0,35- bis 0,45-fachen des Außenradius R des Rades liegt. Die Bruchstelle I der inneren Bruchlinie der Radplatte 4 liegt in einem Abstand vom 0,45- bis 0,5-fachen des Außenradius R des Rades.

Das spannungs- und verformungsarme Eisenbahnrad kann für alle Arten von Schienenfahrzeugen eingesetzt werden, die durch einen Block auf der Lauffläche gebremst werden, insbesondere für Güterwagen, Triebfahrzeuge und Lokomotiven. Aufgrund der guten radialen Nachgiebigkeit bei ausreichender Ermüdungsfestigkeit am kritischen Punkt des Rades, d. h. am Übergang der Radplatte zur Radnabe, kann diese Radkonstruktion auch für Schienenfahrzeuge verwendet werden, bei denen nicht die Scheibenbremse, sondern die Bremsscheiben selbst zum Einsatz kommen, was bei Schienenfahrzeugen des Personenverkehrs der Fall ist.

### Bezugszeichenliste

- 1: Kranzrad
- 2: Fahrfläche
- 3: Radsatz
- 4: Radplatte
- 5: Radnabe
- 6: Übergangsbereich zwischen Radfelge und Radplatte
- 7: Übergangsbereich zwischen Radplatte und Nabe
- 8: äußerer Rand
- 9: Innenkante

- Z: S-Mittelebene Drehachse des Rades
- K: die theoterische Mittellinie
- T: die verschobene Ebene
- A: erster Punkt
- B: der Wendepunkt
- C: der Berührungspunkt
- M: Punkt der maximalen Durchbiegung der Radplatte

## Patentansprüche

1. Eisenbahnrad mit einer zur Drehachse (Z) des Rades senkrechten Mittelebene (S), mit einer aus Lauffläche (2) und Felge (3) bestehenden Radkranz (1), einer Radplatte (4) und einer Radnabe (5), dass das Querprofil der Radplatte (4) entlang der theoretischen Mittellinie K liegt, die zwischen einem im Übergangsbereich (6) der Radplatte (4) zum Radkranz (1) liegenden Punkt A und einem im Übergangsbereich (7) der Radplatte (4) zur Radnabe (5) liegenden Punkt D verläuft, wobei der Punkt A und der Punkt D auf einer einzigen Ebene T liegen, **dadurch gekennzeichnet, dass** die Ebene T von der Mittelebene S um einen Abstand H1 in Richtung eines Umfangs beabstandet ist, wobei die Größe von H1 durch das Verhältnis 0,03-0,25 der Breite H des Radkranzes (1) des Rades bestimmt ist, und die theoretische Mittellinie K ferner durch einen Wendepunkt B verläuft, der zwischen einem Bogen O1 mit dem Radius R1, dem ersten Krümmungsradius, und einem Bogen O2 mit dem Radius R2, dem zweiten Krümmungsradius, liegt, und ferner durch einen Punkt M verläuft, der durch die maximale axiale Auslenkung der Platte (4) des Rades in einem Abstand H2 von der einzigen Ebene T definiert ist, und einen Berührungspunkt C, an dem die theoretische Mittellinie K tangential in eine Linie übergeht, die durch den im Übergangsbereich (7) der Radplatte (4) zur Radnabe (5) liegenden Punkt D verläuft, an dem die theoretische Mittellinie K einen Winkel α mit der Ebene T bildet, wobei der Wendepunkt B, der Punkt M und der Berührungspunkt C in Richtung des Umfangs von der Ebene T liegen.

2. Eisenbahnrad nach Anspruch 1,
**dadurch gekennzeichnet, dass** der Radius R2 des Bogens 02 der theoretischen Mittellinie K größer als oder gleich dem Radius R1 des Bogens O1 der theoretischen Mittellinie K ist.

3. Eisenbahnrad nach einem der Ansprüche 1 und/oder 2,
**dadurch gekennzeichnet,**
**dass** die Bögen O1 und O2 der theoretischen Mittellinie K der Platte (4) zwischen den Punkten A bis C als Kreise und/oder Kurven zweiten oder dritten Grades ausgebildet sind.

4. Eisenbahnrad nach einem der Ansprüche 1 bis 3,
**dadurch gekennzeichnet,**
**dass** der Radius RA durch 0,7-0,85 R definiert ist, wobei R der Außenradius des Eisenbahnrades ist.

5. Eisenbahnrad nach einem der Ansprüche 1 bis 4,
**dadurch gekennzeichnet,**
**dass** der Radius RD durch 0,25-0,35 R definiert ist, wobei R der Außenradius des Eisenbahnrades ist.

6. Eisenbahnrad nach einem der Ansprüche 1 bis 5,
**dadurch gekennzeichnet,**
**dass** der Radius RM durch 0,6-0,7 R definiert ist, wobei R der Außenradius des Eisenbahnrades ist.

7. Eisenbahnrad nach einem der Ansprüche 1 bis 6,
**dadurch gekennzeichnet,**
**dass** die Abschnitte der theoretischen Mittellinie K der Radplatte zwischen den ersten vier Punkten A, B, M, C durch Kreisbögen gebildet sind, wobei der Abschnitt von A nach B aus einer Krümmung mit einem ersten Krümmungsradius R1 und der Abschnitt von B nach M aus einer Krümmung mit einem zweiten Krümmungsradius R2 besteht, wobei der erste Radius R1 kleiner als der zweite Radius R2 ist oder beide Radien gleich sind.

## Claims

1. Railway wheel with a center plane (S) perpendicular to the axis of rotation (Z) of the wheel, with a wheel rim (1) consisting of a running surface (2) and a rim (3), a wheel plate (4) and a wheel hub (5),
wherein the cross profile of the wheel plate (4) lies along the theoretical center line K, which runs between a point A lying in the transition region (6) of the wheel plate (4) to the wheel rim (1) and a point D lying in the transition region (7) of the wheel plate (4) to the wheel hub (5), wherein the point A and the point D lie on a single plane T,
**characterized in that**,
the plane T is spaced from the center plane S by a distance H1 in the direction of a circumference, wherein the size of H1 is determined by the ratio 0.03 - 0.25 of the width H of the wheel rim (1) of the wheel, and the theoretical center line K further runs through an inflection point B, which lies between an arc O1 with the radius R1, the first radius of curvature, and an arc O2 with the radius R2, the second radius of curvature, and further runs through a point M, which is defined by the maximum axial deflection of the plate (4) of the wheel at a distance H2 from the single plane T, and a contact point C, at which the theoretical center line K tangentially transitions into a line, which runs through the point D lying in the transition region (7) of the wheel plate (4) to the wheel hub (5), at which the theoretical center line K forms an angle α with the plane T, wherein the inflection point B, the point (M) and the contact point C lie in the direction of the circumference from the plane T.

2. Railway wheel according to claim 1,
**characterized in that**,
the radius R2 of the arc O2 of the theoretical center line K is greater than or equal to the radius R1 of the arc O1 of the theoretical center line K.

3. Railway wheel according to one of claims 1 and/or 2,
**characterized in that**,
the arcs O1 and O2 of the theoretical center line K of the plate (4) between the points A to C are formed as circles and/or curves of second or third degree.

4. Railway wheel according to one of claims 1 to 3,
**characterized in that**,
the radius RA is defined by 0.7-0.85 R, wherein R is the outer radius of the railway wheel.

5. Railway wheel according to one of claims 1 to 4,
**characterized in that**,
the radius RD is defined by 0.25-0.35 R, wherein R is the outer radius of the railway wheel.

6. Railway wheel according to one of claims 1 to 5,
**characterized in that**,
the radius RM is defined by 0.6-0.7 R, wherein R is the outer radius of the railway wheel.

7. Railway wheel according to one of claims 1 to 6,
**characterized in that**,
the sections of the theoretical center line K of the wheel plate between the first four points A, B, M, C are formed by circular arcs, wherein the section from A to B consists of a curvature with a first radius of curvature R1 and the section from B to M consists of a curvature with a second radius of curvature R2, wherein the first radius R1 is smaller than the second radius R2 or both radii are equal.

## Revendications

1. Roue ferroviaire avec un plan central (S) perpendiculaire à l'axe de rotation (Z) de la roue, avec une jante de roue (1) constituée d'une surface de roulement (2) et d'un rebord (3), un disque de roue (4) et un moyeu de roue (5),
dans laquelle le profil transversal du disque de roue (4) se situe le long de la ligne centrale théorique K, qui s'étend entre un point A situé dans la région de transition (6) du disque de roue (4) vers la jante de roue (1) et un point D situé dans la région de transition (7) du disque de roue (4) vers le moyeu de roue (5), dans laquelle le point A et le point D se situent sur un plan unique T,
**caractérisée en ce que**,
le plan T est espacé du plan central S d'une distance H1 dans la direction d'une circonférence, dans laquelle la taille de H1 est déterminée par le rapport 0,03 - 0,25 de la largeur H de la jante de roue (1) de la roue, et la ligne centrale théorique K s'étend en outre à travers un point d'inflexion B, qui se situe entre un arc O1 avec le rayon R1, le premier rayon de courbure, et un arc O2 avec le rayon R2, le second rayon de courbure, et s'étend en outre à travers un point M, qui est défini par la déflexion axiale maximale du disque (4) de la roue à une distance H2 du plan unique T, et un point de contact C, auquel la ligne centrale théorique K transite tangentiellement dans une ligne, qui s'étend à travers le point D situé dans la région de transition (7) du disque de roue (4) vers le moyeu de roue (5), auquel la ligne centrale théorique K forme un angle α avec le plan T, dans laquelle le point d'inflexion B, le point (M) et le point de contact C se situent dans la direction de la circonférence depuis le plan T.

2. Roue ferroviaire selon la revendication 1,
**caractérisée en ce que**,
le rayon R2 de l'arc O2 de la ligne centrale théorique K est supérieur ou égal au rayon R1 de l'arc O1 de la ligne centrale théorique K.

3. Roue ferroviaire selon l'une des revendications 1 et/ou 2,
**caractérisée en ce que**,
les arcs O1 et O2 de la ligne centrale théorique K du disque (4) entre les points A à C sont formés comme des cercles et/ou des courbes de second ou troisième degré.

4. Roue ferroviaire selon l'une des revendications 1 à 3,
**caractérisée en ce que**,
le rayon RA est défini par 0,7-0,85 R, dans laquelle R est le rayon extérieur de la roue ferroviaire.

5. Roue ferroviaire selon l'une des revendications 1 à 4,
**caractérisée en ce que**,
le rayon RD est défini par 0,25-0,35 R, dans laquelle R est le rayon extérieur de la roue ferroviaire.

6. Roue ferroviaire selon l'une des revendications 1 à 5,
**caractérisée en ce que**,
le rayon RM est défini par 0,6-0,7 R, dans laquelle R est le rayon extérieur de la roue ferroviaire.

7. Roue ferroviaire selon l'une des revendications 1 à 6,
**caractérisée en ce que**,
les sections de la ligne centrale théorique K du disque de roue entre les quatre premiers points A, B, M, C sont formées par des arcs circulaires, dans laquelle la section de A à B consiste en une courbure avec un premier rayon de courbure R1 et la section de B à M consiste en une courbure avec un second rayon de courbure R2, dans laquelle le premier rayon R1 est plus petit que le second rayon R2 ou les deux rayons sont égaux.
